# EUROPEAN PATENT SPECIFICATION

(11) **EP 0 786 184 B1**
(45) Date of publication and mention of the grant of the patent: **13.06.2001**
(21) Application number: 95938190.6
(22) Date of filing: 04.10.1995
(51) Int. Cl.: H04M 11/00

(54) **METHODS AND APPARATUS FOR ENCODING AND DECODING DATA TRANSMITTED OVER TELEPHONE LINES**
VERFAHREN UND VORRICHTUNG ZUR KODIERUNG UND DEKODIERUNG VON ÜBER TELEFONLEITUNGEN ÜBERTRAGENEN DATEN
PROCEDE DE CODAGE ET DE DECODAGE DE DONNEES TRANSMISES PAR L'INTERMEDIAIRE DE LIGNES TELEPHONIQUES

(30) Priority: 04.10.1994 IL 11115794
(43) Date of publication of application: 30.07.1997
(73) Proprietor: ENCO-TONE, LTD., Jerusalem 91450 (IL)
(72) Inventor: LABATON, Isaac, J., 91430 Jerusalem (IL); KELLY, Michael, K., Phoenix, AZ 85032 (US)
(74) Representative: Waldren, Robin Michael
(86) International application number: US9512979
(87) International publication number: WO9610880

(56) References cited:
- US-A- 4 769 836
- US-A- 5 208 852
- US-A- 5 249 220

## Description

### TECHNICAL FIELD

The present invention relates, generally, to the acoustic transmission of information and, more particularly to methods an apparatus for generating, transmitting, and processing acoustic data and the digital data representative thereof.

### BACKGROUND ART AND TECHNICAL PROBLEMS

The amount of data and information routinely transmitted on a world-wide basis over the world's existing 1.2 billion telephones and associated telephone lines continues to increase. Digital and analog data transmitted over telephone lines is often generated through modems and received by other modems, without at any time exhibiting an acoustic characteristic (i.e. an audible signal) at any time. In addition, data and information which is voice coupling based, for example normal conversation, has an acoustic characteristic. Data and information having an acoustic characteristic continues to constitute a substantial portion of the information sent over telephone lines. This information has the characteristic of being acoustic at at least some point before being converted, through the use of transducers such as microphones, into electromagnetic signals and transmitted over physical lines (e.g. optical fibers, cables, wires, and the like) or, alternatively, transmitted via stations such as satellites as electromagnetic waves.

With regard to voice coupled or acoustic information, it is known that the digital information is transmitted as acoustic waves at least for a portion of its path, for example from the sound generator to the sound transducer (e.g. microphone) which resides in a typical telephone mouthpiece.

One know prior art application of acoustic coupling involves a modem device used as an acoustic coupling device, such as an acoustic coupling cradle for receiving a telephone headset in intimate physical contact with the acoustic coupling device. This method of acoustic coupling of the telephone headset with the telephone line has largely been replaced with the technique of electrically connecting the modem directly to the telephone lines, thus substantially increasing the rate of transmission of information.

A further known example of acoustic coupling involves the well-known Dual Tone Multi-Frequency (DTMF) scheme. In the most popular DTMF scheme, digital information is transmitted as voice coupled (acoustic) information. In a typical DTMF system a person presses a button on a telephone keypad, where upon two phenomena occur. In the first instance, a characteristic sound associated with the depressed button is generated and played through the telephone headset such that it is audible to the user. In addition, an electrical signal associated with the depressed key is generated for transmission by the telephone to a desired destination. Thus, the term "DTMF" encompasses both an electrical magnetic DTMF and an acoustic DTMF.

Other devices are generally known which generate DTMF tones, but which are separate from the telephone. For example, DTMF generating modules are known which generate tones as an acoustic wave outside the phone, for example by a Tone Dialer. The acoustic wave generated by the Tone Dialer may be picked up by the telephone headset microphone and transmitted through the telephone to a desired destination.

A popular use of DTMF devices involves their use with Interactive Voice Response (IVR) boards, for example through the use of DTMF tones to chose a particular item from a verbal menu. That is, when a caller desires to interact with an IVR system, the caller dials up a telephone line associated with the IVR computer through the use of a conventional telephone. The IVR board associated with the central computer generates human audible voice commands, and prompts the caller to select various menu options through the use of DTMF tones.

The acoustic DTMF tone may be characterized as a sound associated with a particular button pressed by the caller. This is true whether the caller employs the Keypad on the telephone to generate DTMF tones or, alternatively, if the caller uses a separate DTMF or tone dialing module to generate the DTMF tones. In either case, the sound is typically composed of two frequency components: a first frequency selected out of a group of four "low" frequencies, and a second frequency selected from a group of four "high" frequencies. This two frequency tone is picked up by the microphone in the telephone headset, and eventually converted into an electrical signal (the electromagnetic DTMF). This signal then travels through the phone lines until it reaches its destination, carrying the digital information encoded as an analog electromagnetic wave. The IVR board detects the signal through the use of an array of hardware and/or software filters. When the IVR board processes the signal and identifies the particular DTMF tone, it informs the computer associated with the IVR board of the particular "button" depressed by the caller, for example one of the numbers 0-9 or the characters "^{*}" and "#".

Another popular use of voice coupled information surrounds the dialing function employed by telephone networks having a Central Office which is DTMF capable but for which at least some of the telephones associated with the telephone network are not DTMF capable. More particularly, in the case of "non-touch tone telephones" (also referred to as "rotary" or "pulse" telephones), a DTMF tone dialer may be employed by the user of a non-DTMF telephone to acousticly generate DTMF tones in order to dial a number or otherwise communicate with a DTMF-based destination. The acoustic DTMF signal generated by the tone dialer is picked by the transducer at the telephone, and converted into a DTMF electromagnetic signal and thereafter transmitted by the telephone.

Other uses and applications of acoustic coupling techniques are set forth in Patent Cooperation Treaty (PCT) application serial no. WO 93/11619.

For example, acoustic coupling devices may be used in the context of over-the-phone identification systems based on the use of special tone dialers which generate a string of acoustic DTMF signals representative of credit card transaction data, digital signatures, and other data and information.

Theoretically, digital information may be transmitted over telephone lines by associating a different frequency with the various digital characters sought to be transmitted, much in the nature of a conversion table. Such a table would theoretically assign to each alphanumeric character a unique frequency. In this way, each time a sound wave corresponding to particular frequency is applied to the telephone transducer, it would be converted into an electrical signal representative of that same frequency and transmitted. When the signal is detected at the destination, the respective alphanumeric character corresponding to that particular frequency would be detected by the destination. While perhaps viable theoretically, this approach is problematic in several respects.

For example, electrical and acoustic noises are inevitably present in the background, transmission hardware, and other aspects of the transmission system. Consequently, the detection filters will inevitably detect spurious frequency activity.

To reduce the incidence of spurious noise in the context of DTMF systems, the existing DTMF paradigm has evolved with a first set of low frequencies (e.g. 697 Hz, 770 Hz, 852 Hz, and 941 Hz) and a second set of high frequencies (e.g. 1209 Hz, 1336 Hz, 1447 Hz, and 1663 Hz). By requiring the detection of one frequency from the low frequency group simultaneously with one frequency from the high frequency group, wherein both frequencies are required to exceed a minimum amplitude threshold, a substantial amount of spurious background noise may be eliminated. Nevertheless, existing DTMF systems remain susceptible to the detection of false DTMF signals and the non-detection of true DTMF signals.

A further problem associated with existing DTMF signals surrounds the fact that transmission line quality can vary from call to call, even when using the same telephone, as well as the fact that noise may be generated at virtually any stage during transmission. Finally, such factors as absorption and gain along the transmission lines affect different frequencies to different degrees. In order to overcome some of these difficulties, existing DTMF systems may require a specific range of amplitude for respective activities, i.e. a minimal amplitude.

A further problem associated with acoustic coupling systems involve the frequency response characteristic of the telephone mouth piece transducer (e.g. microphone). In particular, the transmission of data using sound waves, in particular acoustic DTMF signals, may be adversely affected by the transducer's frequency response characteristic, and thus may impact the accuracy with which acoustic signals are converted into electrical signals. Moreover, the frequency response characteristics vary from telephone to telephone; the frequency response characteristic for a particular telephone may even change with the physical position of the microphone in respect of the local vertical or gravitational line.

Yet a further problem associated with existing DTMF voice coupling systems surrounds the elapsed transmission time typically required for a DTMF tone transmission. More particularly, as a result of the fact that a plurality of filters are often needed to effectively receive and identify a DTMF tone, a particular tone must be generated on the order of a minimum of at least 40 milliseconds in duration; 75 milliseconds per tone is more common. In addition, a "pause" generally on the order of 40 milliseconds is often used as a separation window between tones. Consequently, the transmission of on the order of 100 hexadigits may last 11.5 seconds or more; this is typically cumbersome and simply requires more time than is practical for the transmission of large volumes of data quickly and efficiently.

A system and method is thus needed which overcomes the acoustic transmission and acoustic coupling problems associated with existing DTMF transmission systems.

US 4 769 836 relates to a dialling tone generator for automatically connecting a telephone number into a dialling tone signal and sending it to a push button telephone set to call the telephone of a second party.

US 5 257 309 relates to improved apparatus and method for increasing the sensitivity and reliability of DTMF signal detection and identification methods.

The present invention provides a method of transmitting data over a Public Switched telephone Network (PSTN) from a conventional telephone to a destination unit through the use of a hand-held tone generating device at said telephone, characterised in that the data is alphanumeric data, and said destination unit includes an analogue to digital converter (ADC) the method comprising the steps of:
generating, via said tone generating device, an acoustic signal comprising at least a first and a second frequency component, said first frequency component having amplitude defined as a first predetermined function of time, and said second frequency component having an amplitude defined as a second predetermined function of time;
removeably coupling said tone generating device to a mouthpiece associated with said telephone during at least a portion of said generating step such that said acoustic signal is received by said telephone and transmitted through said PSTN to said destination unit;
detecting said acoustic signal at said destination unit;
determining, by said destination unit, a point in time at which the amplitude of said first frequency component and the amplitude of said second frequency component satisfy a predetermined mathematical relation; and
analysing, by said destination unit, said acoustic signal at said point in time to derive a unique alphanumeric character represented by said acoustic signal at said point in time.

The subject invention will hereinafter be described in conjunction with the appended drawing figures, wherein like numerals denote like elements, and:
Figure 1 is an exemplary embodiment of a tone dialing module in accordance with are aspect of the subject invention, shown broadcasting a tone into a telephone handset;
Figures 2A and B show a wave form of a low frequency component and a high frequency component, respectively, on an amplitude versus time graph;
Figure 3 is a duration and pause window graph in accordance with one aspect of the present invention;
Figure 4 sets forth pre-convened tables specific for Fourier analysis computation for use in accordance with the present invention;
Figure 5 is a time graph setting forth standard DTMF timing information in the context of the present invention;
Figure 6 shows a plurality of DTMF frequencies transmitted at a pre-determined amplitude in accordance with one aspect of the present invention;
Figure 7 shows a frequency versus gain factor transmission frequency response graph;
Figure 8 illustrates the technique of transmitting frequency amplitude data at the beginning and at the end of an acoustic message in accordance with one aspect of the present invention;
Figures 9-12 set forth graphical messages and data processing techniques relating thereto in the context of the present invention;
Figures 13A-C set forth various embodiments of a DTMF tone dialer device of the present invention;
Figures 14-16 set forth various alternate embodiments of a tone dialing device in accordance with the present invention; and
Figures 17-18 set forth an exemplary embodiment of a DTMF tone dialing device useful in the context of the present invention shown interfacing with a telephone headset and a computer.

Various embodiments of the present invention are hereinafter described in the context of enhancing the reliability of transmission of data over conventional telephone and other transmission lines, particularly data generated by a device which is not physically connected to the telephone.

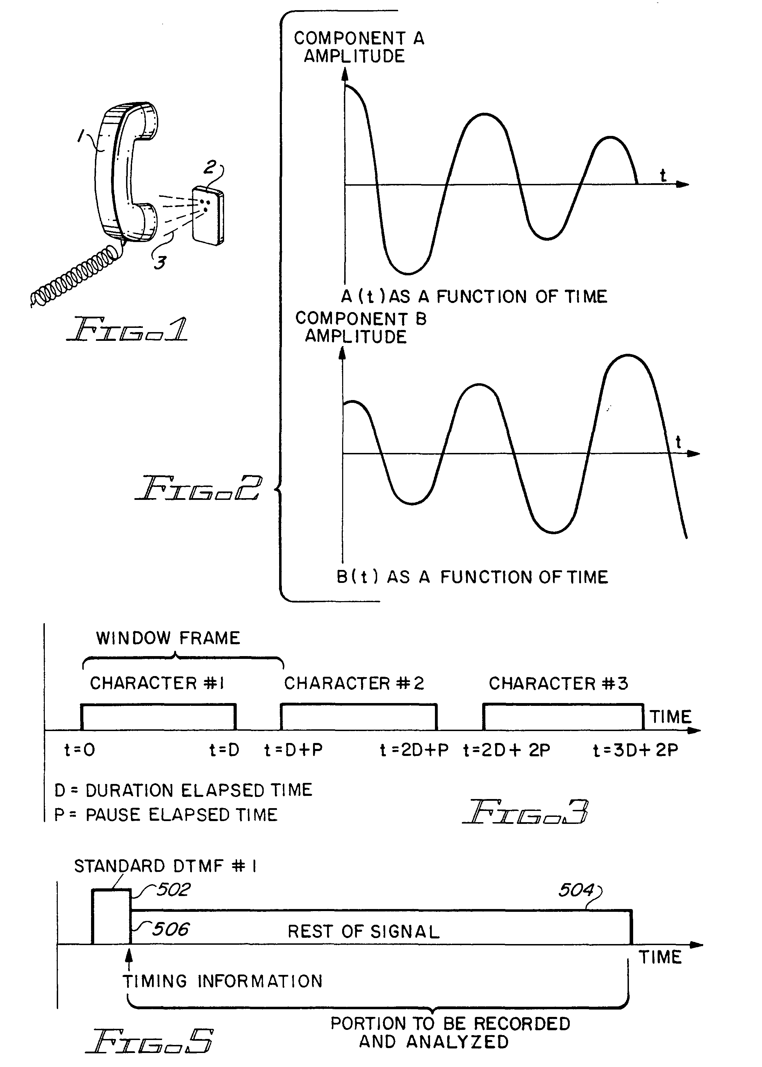

Referring now to Figure 1, an exemplary acoustic signal generator 2 is shown proximate a conventional telephone headset 1, with acoustic generator 2 shown generating an acoustic signal 3 which is received by headset 1. In this regard, it will be understood that acoustic signal 3 is intended to carry alphanumeric data, for example various characters including the numbers 0-9, letters A-Z, and various other characters known in the art. In accordance with a particularly preferred embodiment, acoustic signal 3 (and its electronic representation generated by the telephone 1) suitably comprises a DTMF tone or other plural frequency tone, for example consisting of two separate frequencies.

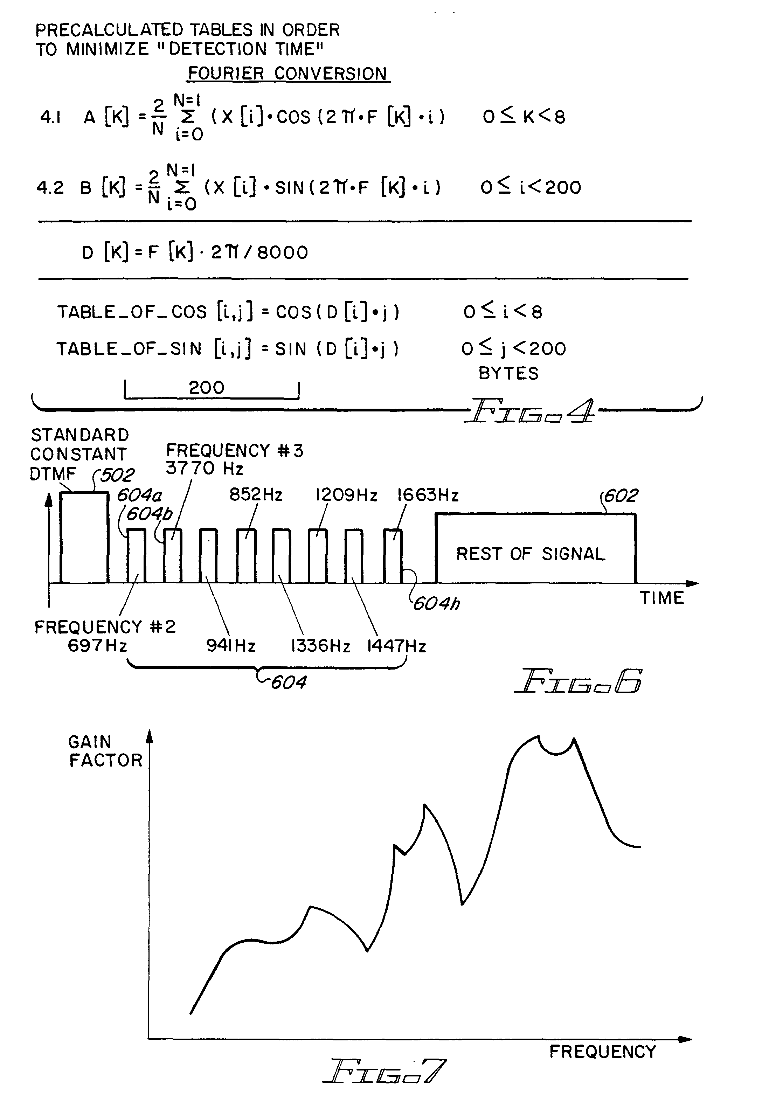

Referring now to Figures 1 and 2, acoustic generator 2 may suitably be configured to generate an acoustic signal such that both frequencies comprising the signal vary in amplitude as a function of time (as depicted in figures 2A and 2B). More particularly, a first signal component A(low) represents the amplitude of the low frequency component of acoustic signal 3, and a second component A(high) suitably represents the high frequency component, showing a varying amplitude as a function of time. In accordance with one aspect of the present invention, the relation A (low)/A (high), i.e. the ratio of the low frequency component amplitude to the high frequency component amplitude will vary during the time of generation by acoustic generator 2. By varying the amplitudes of the high and low frequency components in a desired manner, it can be assured that at least for a portion of the generation time, both the high frequency component and the low frequency component will arrive at the destination detector (i.e. in IVR board) at a relatively similar amplitude, thereby substantially increasing the probability that the IVR board will recognize the DTMF signal. In accordance with the illustrated embodiment, the peak amplitude of the low frequency component gradually decreases as a function of time, whereas the peak amplitude of the high frequency component varies as an increasing function of time. It will be appreciated, however, that any convenient time varying functions may be employed to increase the probability that the DTMF signal will be properly interpreted at the destination detector regardless of the characteristic of the telephone mouthpiece microphone.

A further improvement of the foregoing method consists in digitizing the signals received and applying mathematical analysis methods (e.g. Fourier analysis) in order to detect the presence of the two frequencies which represent the particular alphanumeric character being transmitted. A further elaboration of this method consist in the detection of the pre-convened trend of change of the amplitude of each particular frequency component during detection as a criteria of the authentication or verification of the determination of the transmitted character.

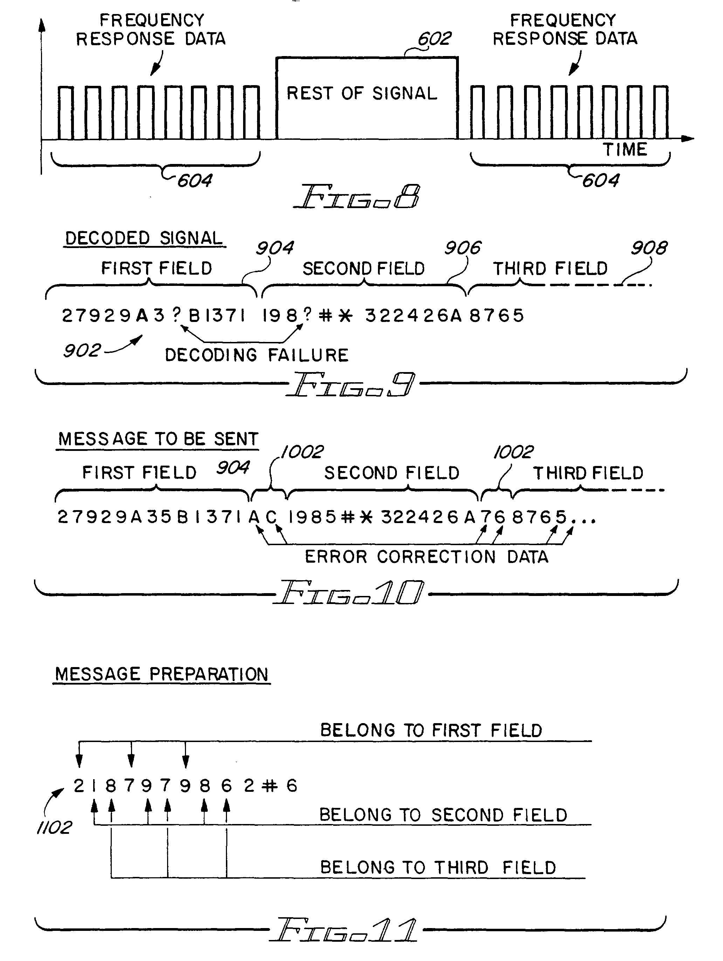

Referring now to Figure 3, data may be encoded and de-coded and carried by signals which are acoustical at least for a portion of their transmission path in accordance with a further aspect of the present invention. In particular, the acoustic signal generator of the present invention may be suitably configured to generate time ordered acoustic signals. These "time array" signals, which suitably comprise a concatenation of acoustic signals, may be spaced apart in a pre-determined time window sequence. In this way, at the detection end, the detecting circuitry may know in advance (on a time axis) when to expect the presence of the various frequencies representing the transmitted data. As a result, strong analysis techniques may be employed, e.g. Fourier analysis, in order to determine which frequencies have been sent for each particular window frame, as well as the point in time in which a signal should have been sent in accordance with the methods described herein.

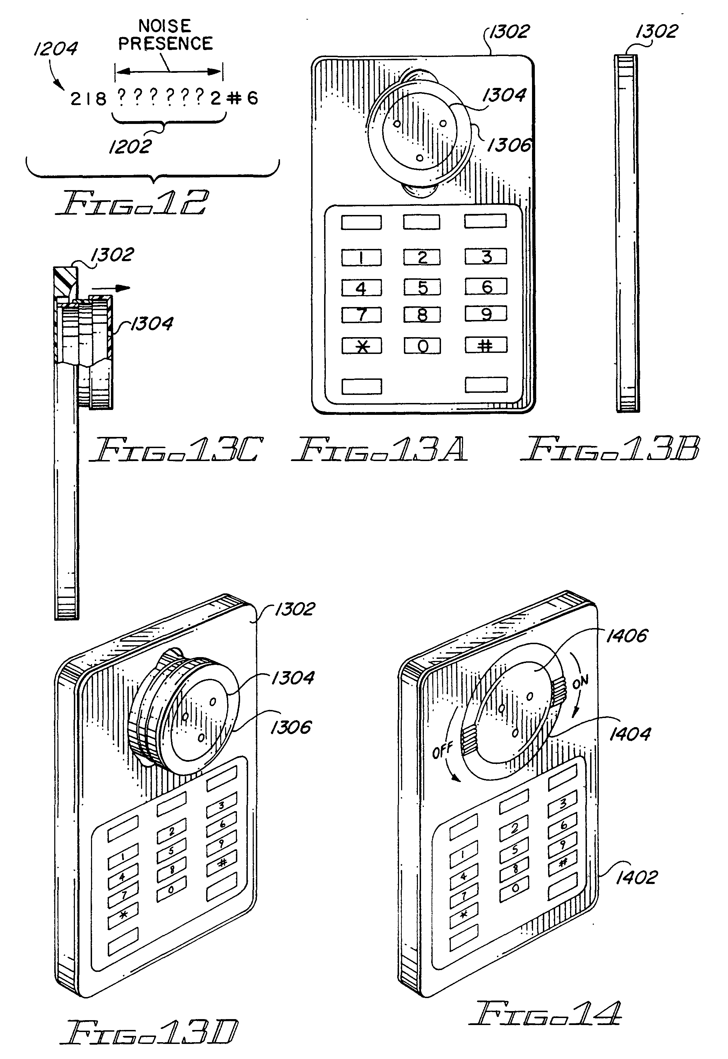

Referring now to Figure 4, a further aspect of the present invention surrounds the computation of pre-determined tables specific for the Fourier analysis computation corresponding to various DTMF frequencies in order to reduce detection time, i.e. the elapsed time from the instant the detection circuitry receives the digitized message until the analysis of the transmitted characters is completed. More particularly, the precalculated tables set forth in Figure 4 may be used to minimize detection time in accordance with the Fourier conversions set forth therein. Specifically, equations 4.1 and 4.2 may be employed, where K corresponds to one of the various (e.g. 8) frequencies in the plural tone scheme.

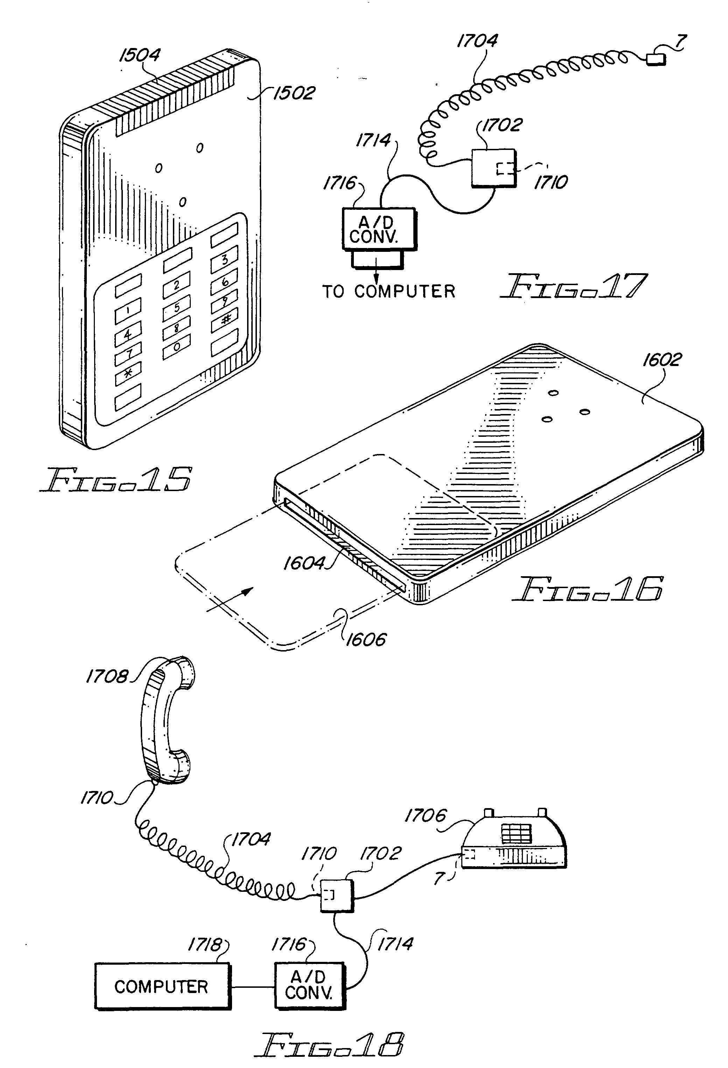

Referring now to figure 5, in accordance with a further aspect of the present invention, it may be desirable to begin each alphanumeric acoustic signal message with the same standard DTMF signal 502, followed by the transmission of the alphanumeric acoustic signal message 504 to be transmitted. In this way, a real time signal, for example timing junction 506, may be detected by a conventional IVR board, thus notifying the detection circuitry of the beginning of the message, for example to permit the detection circuitry to start recording the analog signal which follows timing junction 506.

Referring now to Figure 6, a transmitted message 602 may be conveniently preceded by standard DTMF tone 502 as well as a baseline message 604, for example interposed between message 602 and standard DTMF signal 502. More particularly, baseline data 604 suitably comprises a plurality of subpackets 604A-604H, for example relating to each of the various frequencies utilized in the plural transmission scheme, e.g. a representative sample of the various frequencies employed in message 602. In accordance with a further aspect of the present invention, each of the subpackets 604A-604H may suitably be transmitted at a pre-determined amplitude, for example a common amplitude. In this way, the detection circuitry is thereby afforded the capacity to compute the transmission complex frequency response characteristic (the "complex characteristic"), i.e., the composite response characteristic for the various transmission factors, including the mouthpiece microphone, telephone headset, PBX, telephone lines, noise environment, PTT's Central Office gain and absorption, multiplexing factors, satellite amplification, and the like. Indeed, since the foregoing factors may affect different frequencies differently, it may be highly desirable to determine the transmission complex frequency response characteristic for the entire transmission system for use in performing data processing functions at the detection circuitry. With momentary reference to Figure 7, an exemplary transmission complex frequency response characteristic is shown for an exemplary transmission system.

Referring now to Figure 8, it may also be desirable to send frequency amplitude data 604 both before and after the acoustic message data 602. In this way, the detection circuity may determine if the transmission complex frequency characteristic changes during the time of reception of signal 602. In this regard, once the detection circuitry is in possession of said information, the detection circuitry may suitably be configured to compute the absolute amplitude to be expected for each of the frequencies used to encode the information. With this knowledge, and further in view of the fact that the relative phase between the two frequencies comprising the DTMF transmission is generally known, the detection circuitry may precisely compute the digitized form of tine analog signal for each of the transmitted characters. That is, the detection circuitry may construct a library of the precise form each transmitted character should have, after having been sent through the particular transmission hardware at a particular time. Finally, the use of baseline data packages 604 facilitates the quick and exact decoding of the information by comparison of the computed signal with the received signal.

In accordance with a further aspect of the present invention, acoustic encoding and de-coding of alphanumeric characters may be provided beyond the 16 characters typically available in standard DTMF schemes which employ four high tones and four low tones. More particularly, by employing various of the techniques described herein, the elimination of spurious noise is enhanced as well as resulting in an increased ability to accurately detect frequencies. Consequently, in accordance with a further aspect of the present invention, the same eight frequencies associated with DTMF schemes may be augmented such that a particular low frequency may be paired not only with any of the four high frequencies (as is known), but a particular low frequency may also be paired with any one of the three low frequencies. Similarly, in accordance with the present invention, a particular one of the four standard high frequencies may not only be paired with any one of the low frequencies (as is known), but a particular high frequency may also be paired with one of the other three high frequencies. In this way, each of the eight standard DTMF frequencies may be paired with any one of the remaining seven, resulting 28 different characters available from the eight frequency field, as compared to 16 possible characters available using conventional DTMF schemes.

In accordance with a further embodiment of the present invention, an exemplary acoustic signal generator may be further configured, and the corresponding detection circuitry may also be further configured, to permit the addition of one or more frequencies to the standard eight DTMF signals in order to permit the creation of an enlarged encoded table. For example, the addition of two more frequencies (totalling ten) results in 45 characters, which is enough for the transmission of a full alphanumeric spectrum in accordance with the present invention.

In accordance with a further embodiment, the transmission and detection circuitry may be configured to permit the transmission of three or more different frequencies for each character, as opposed to the two frequency scheme employed in presently known DTMF systems. In such a tri-tone scheme, it is possible to increase the number of characters to 120, by choosing three out of ten available frequencies for each character. This increase in the number of available characters substantially reduces the number of characters required to transmit a given message. By reducing the transmission time, the practical applications of the plural tone multi-frequency schemes described herein may be increased.

Referring now to Figures 9 and 10, an exemplary decoded signal is shown as a string of alphanumeric characters. As is well-known in the art, powerful and mature error correction algorithms have been proposed, which may be employed to compute one or more characters which are missing from the transmitted signal, due to, for example, the presence of spurious noise. In accordance with a preferred embodiment of the invention, consider an exemplary message 902 which comprises 39 characters. In accordance with the illustrated embodiment, message 902 may be conveniently parcelled into a first field 904, a second field 906, and a third field 908, each comprising, for example, 13 characters. As discussed in greater detail below in connection with Figure 10, it may also be advantageous to add additional error correction factors 1002 between respective fields 904, 906, 908 and so on.

With continued reference to Figures 9 and 10, those skilled in the art will appreciate that presently known error correction algorithms and techniques often involve the addition of characters ("added characters") at the beginning or at the end of a transmitted message. These additional characters are useful in computing any characters which were not properly decoded, for example because of transmission noise. In accordance with one aspect of the present invention, a predetermined window of time may be assigned to each message 902, each sub-message 906, and indeed, to each character within each message and sub-message. Consequently, although transmission noise may result in the non-determination of one or more characters, the window or position in which the non-determined character appears may nonetheless be unambiguously determined. Thus, in accordance with one aspect of the present invention, an interrogation sign (e.g. "?") is depicted in Figure 9 to illustrate such a non-determined character in a known position. By adding additional characters 1002, and further in view of the known position of each interrogation sign (non-determined character), the computation of the non-determined characters may be greatly facilitated, for example in the context of known error correction algorithms. For example, if two additional characters 1002 are added between each subfield, it may be possible to compute one or two characters per subfield which are affected by noise.

Referring now to figure 11, transmission and detection may be further enhanced through the orderly mixing of the aforementioned fields to be carried out before the generation of the acoustic signals, that is, before the transducer generates the acoustic signal. More particularly, a time multiplexed message 1102 may suitably be constructed using the various characters comprising respective subfields 904, 906, and 908. In particular, the first character (namely "2") in message 1102 suitably corresponds to the first character of first subfield 904. The second character in message 1102 suitably corresponds to the first character in second field 906 (namely "1"), and the third character in message 1102 suitably corresponds to the first character in third field 908 (namely "8"). Similarly, the forth character in message 1102 corresponds to the second character in subfield 904, the fifth character in message 1102 corresponds to second character in field 906, and so on. As a consequence of this mixing, and by using the same proportion of additional characters 1002 to message characters, the ability to ascertain non-determined characters in greatly enhanced.

More particularly and with momentary reference to Figure 12, consider a relatively long incident of spurious noise, e.g. 240 milliseconds long, which precludes the determination of six consecutive characters (e.g. sub-string 1202) in the message string 1204 shown in Figure 12. By applying the foregoing techniques without otherwise enlarging the message, the consecutive non-determined characters shown in Figure 12 are "spread out" among the various subfields 904, 906, etc. By reducing the number of consecutive non-determined characters, the ability to determine these characters using error correction algorithms is concomitantly increased. Thus, by adding two additional characters 1002 per subfield, it may be possible to ascertain the characters corresponding to six non-determined characters within a single message 902.

Referring now to Figures 13 A-C, a further embodiment of an exemplary tone dialing generator 1302 suitably comprises a thin, credit card sized device which suitably exhibits dimensions on the order of standard smart card dimensions. For example, device 1302 is suitably on the order of a few millimeters thick, with the necessary electronic components embedded within the substrate which may suitably be made from plastic. These electronic components generate the analog electronic signals which are input to a suitable transducer (speaker) 1304 which, in turn, generates the acoustic signal. In accordance with a preferred embodiment, speaker 1304 employs piezoelectric transducing components. Notwithstanding the limited acoustic fidelity of presently available, inexpensive piezoelectric speakers, use of the signal processing techniques set forth herein in combination with the time segmentation methods discussed herein will result in a very high proportion of successful transmission and decoding of acoustical signals.

With continued reference to Figure 13, an extractable cone 1306 may suitably be employed in a manner which circumscribes speaker 1304. Retractable cone 1306 may be used to shield environmental noise during tone generation, thereby improving the signal-to-noise ratio of speaker 1304. After transmission is completed, cone 1306 may be retracted and returned to its original position, such that the card 1302 may be placed in a wallet for convenient carrying. Cone 1306 may suitably be made from any appropriate material, including thin film, or a suitable textile, fabric, or the like. Alternatively, cone 1306 may be made from tyvek. Cone 1306 may also be pleated, as desired.

In accordance with a further embodiment of the present invention, a key pad setting forth various characters to be transmitted by a tone dialing device in accordance with the present invention may be disposed on the same side of the card as the speaker, or on the opposite side of the card as the speaker. In the latter embodiment wherein the "DTMF" key pad is disposed opposite from the speaker, it may be possible to place the speaker (regardless of whether the speaker also incorporates a retractable cone) directly against the telephone mouthpiece, thereby exposing the key pad for convenient manipulation by the user.

Referring now to Figure 14, a thin card tone generating device 1402 may comprise a screwable on/off switch 1404 which may be rotated in a first direction (e.g. clockwise) to switch the device on, and counter clockwise to switch the device off. In addition, the on/off switch 1404 which surrounds a suitable speaker 1406 may be configured to extend from the plane of card 1402 in the on position, and retract to the planar position when in the off position.

Referring now to Figure 15, an alternative embodiment of a tone dialing device 1502 suitably comprises a PCMCIA connector 1504 which permits device 1502 to interchange data with and otherwise communicate with virtually any PCMCIA compatible device, for example by allowing card 1502 to be inserted into the PCMCIA slot of a host device.

Referring now to Figure 16, an alternative embodiment of a tone transmitting device 1602 suitably comprises a card slot 1604 for receiving a card 1606, for example a card which bears information on a magnetic stripe, or the like. Alternatively, card 1606 may comprise a smart card, in which case device 1602 suitably incorporates corresponding smart card contacts (not shown), for example within the interior of card slot 1604.

Referring now to Figures 17 and 18, a tone generation device 1702 may be suitably interposed in a cord 1704 which extends between a conventional telephone base 1706 and a telephone handset 1708. Alternatively, tone dialing device 1702 may be equipped with RF detection and/or transmission circuitry, such that it may interface with conventional cordless telephones.

With continued reference to Figures 17 and 18, a connector 7 may be employed to connect tone generating device 1710 to telephone 1706; in addition, a tone generation device 1702 may also include a slot 1710 for convenient receipt of a connector (not shown) associated with phone cord 1704. In this way, tone generating device 1702 may be manufactured and distributed as a module which may be attached to a standard telephone without having to reconfigure the telephone other than to interpose device 1702 between the base and the handset.

With continued reference to Figures 17 and 18, tone generating device 1702 may be also equipped with a connector 1714 suitable for connecting device 1702 to an analog digital converter (ADC) 1716 to thereby permit device 1702 to interface with a computer 1718. In this way, tone generating device 1702 may be configured to "listen" to the analog electric signals which represent the encoded messages discussed herein, whereupon these analog electric signals may be digitized, either by device 1702 or by ADC 1716. If desired, the digitized signals may then be decoded by device 1702 or, alternatively, transmitted to computer 1718 for decoding and/or further processing.

Although the present invention is set forth herein in the context of the appended drawing figures, it will be appreciated that the invention is not limited to the specific forms shown. Various modifications and enhancements in the design and arrangement of the various components, processes, steps and descriptions thereof as set forth herein may be made without departing from the scope of the present invention as set forth in the appended claims.

## Claims

1. A method of transmitting data over a Public Switched telephone Network (PSTN) from a conventional telephone (1, 1706, 1708) to a destination unit through the use of a hand-held tone generating device (2) at said telephone (1, 1708, 1706), characterised in that the data is alphanumeric data, and said destination unit includes an analogue to digital converter (ADC) (1716)
the method comprising the steps of:
generating, via said tone generating device, (1, 1302, 1402, 1502, 1602, 1702) an acoustic signal (3) comprising at least a first and a second frequency component, said first frequency component having amplitude defined as a first predetermined function of time, and said second frequency component having an amplitude defined as a second predetermined function of time;
removeably coupling said tone generating device (2, 1302, 1402, 1502, 1602, 1702) to a mouthpiece (1, 1708) associated with said telephone (1, 1706) during at least a portion of said generating step such that said acoustic signal (3) is received by said telephone (1, 1706, 1708) and transmitted through said PSTN to said destination unit;
detecting said acoustic signal (3) at said destination unit;
determining, by said destination unit, a point in time at which the amplitude of said first frequency component and the amplitude of said second frequency component satisfy a predetermined mathematical relation; and
analysing, by said destination unit, said acoustic signal (3) at said point in time to derive a unique alphanumeric character represented by said acoustic signal (3) at said point in time.

2. The method of claim 1, wherein said predetermined mathematical relationship comprises a predetermined ratio of said amplitude of said first frequency component to said amplitude of said second frequency component.

3. The method of claim 1, wherein said predetermined ratio is unity.

4. The method of claim 1, wherein said first frequency component exhibits a frequency selected from the group consisting essentially of 697 Hz, 770 Hz, 852 Hz, and 941 Hz, and said second frequency component exhibits a frequency selected from the group consisting essentially of 1209 Hz, 1336 Hz, 1447 Hz, and 1663 Hz.

5. The method of claim 1, wherein said destination unit comprises an Interactive Voice Response (IVR) unit.

6. The method of claim 1, wherein said acoustic signal (3) further comprises a third frequency component, such that said unique alphanumeric character is determined as a function of said first, second, and third frequencies.

7. The method of claim 1, further comprising the steps of:
sequentially generating, via said tone generating device, (1, 1302, 1402, 1502, 1602, 1702) successive multi-frequency acoustic signals each comprising at least two frequency components with each said acoustic signal having a duration t₁, and separated from one another by a duration t₂, said acoustic signals being generated in multiples of "n" of said acoustic signals such that a data word has a duration of n(t₁ and t₂) where t₁>0 and t₂≥0;
generating, via said tone generating device (2, 1302, 1402, 1502, 1602, 1702), a correction word comprising at least one frequency component and having a duration t₃,
interposing, by said tone generating device (2, 1302, 1402, 1502, 1602, 1702), a correction word between each of said successive data words;
transmitting, in accordance with a predetermined time segmentation relationship, an alternating series of said data words and said correction words from said tone generating device, through said telephone (1, 1706, 1708) and said PSTN, to said destination;
analysing, by said destination unit, said data words and said correction words in accordance with said predetermined time segmentation relationship, to derive a unique alphanumeric character associated with each acoustic signal comprising said data words.

8. The method of claim 1, wherein said first predetermined function of time is different than said second predetermined function of time.

9. The method of claim 1, wherein said first predetermined function of time is a constant function.

10. The method of claim 1, wherein said first predetermined function of time is an increasing function, and said second predetermined function of time is a decreasing function.

11. The method of claim 7, further comprising the steps of:
monitoring the transmission complex frequency response of at least a portion of the transmission system associated with said PSTN during transmission of a correction word;
determining, in accordance with said monitoring step, a transmission complex frequency response characteristic of said portion of said transmission system; and
employing said characteristic in conjunction with an error correction algorithm to clarify an incorrectly determined alphanumeric character.

12. The method of claim 6, wherein only one of said components are selected from the following frequencies 697 Hz, 770 Hz, 852 Hz, and 941 Hz.

13. The method of claim 12, wherein at least one of said components are selected from the following frequencies: 1209 Hz, 1336 Hz, 1447 Hz, and 1663 Hz.

14. The method of claim 6, wherein at least one of said frequency components is selected from a group of at least nine unique frequencies.

15. The method of claim 1, wherein said tone generating device comprises a substantially planar, credit card-sized module (1302) including an extendible speaker sleeve (1304, 1306) configured to surround portion of a mouthpiece associated with said telephone to thereby partially shield said mouthpiece from environmental noise.

## Patentansprüche

1. Verfahren zum Übertragen von Daten über ein öffentlich vermitteltes Telefonnetz (PSTN) von einem herkömmlichen Telefon (1, 1706, 1708) zu einer Zieleinheit über die Verwendung einer handgehaltenen, tonerzeugenden Einrichtung (2) bei dem Telefon (1, 1708, 1706), dadurch gekennzeichnet, daß die Daten alphanumerische Daten sind und die Zieleinheit einen Analog-zu-digital-Konverter (ADC) (1716) einschließt,
wobei das Verfahren die Schritte umfaßt:
Erzeugen über die Tonerzeugungseinrichtung (1, 1302, 1402, 1502, 1602, 1702) eines akustischen Signals (3), das zumindest eine erste und eine zweite Frequenzkomponente umfaßt, wobei die erste Frequenzkomponente eine Amplitude aufweist, die als eine erste vorbestimmte Funktion einer Zeit definiert ist, und die zweite Frequenzkomponente eine Amplitude aufweist, die als eine zweite vorbestimmte Funktion einer Zeit definiert ist;
entfernbar Koppeln der Tonerzeugungseinrichtung (2, 1302, 1402, 1502, 1602, 1702) mit einem Mundstück (1, 1708), das dem Telefon (1, 1706) während zumindest eines Abschnitts des Erzeugungsschritts zugeordnet ist, derart, daß das akustische Signal (3) von dem Telefon (1, 1706, 1708) empfangen wird und über das PSTN zu der Zieleinheit übertragen wird;
Erfassen des akustischen Signals (3) bei der Zieleinheit;
Bestimmen, durch der Zieleinheit, eines Zeitpunktes, zu welchem die Amplitude der ersten Frequenzkomponente und die Amplitude der zweiten Frequenzkomponente eine vorbestimmte mathematische Beziehung erfüllen; und
Analysieren, durch die Zieleinheit, des akustischen Signals (3) zu dem Zeitpunkt, um ein einzelnes alphanumerisches Zeichen, das durch das akustische Signal (3) zu dem Zeitpunkt dargestellt wird, abzuleiten.

2. Verfahren nach Anspruch 1, wobei die vorbestimmte mathematische Beziehung ein vorbestimmtes Verhältnis der Amplitude der ersten Frequenzkomponente zu der Amplitude der zweiten Frequenzkomponente umfaßt.

3. Verfahren nach Anspruch 1, wobei das vorbestimmte Verhältnis eins ist.

4. Verfahren nach Anspruch 1, wobei die erste Frequenzkomponente eine Frequenz aufzeigt, die von der Gruppe gewählt ist, die im wesentlichen aus 697 Hz, 770 Hz, 852 Hz und 941 Hz besteht, und die zweite Frequenzkomponente eine Frequenz aufzeigt, die von der Gruppe gewählt wird, die im wesentlichen aus 1209 Hz, 1336 Hz, 1447 Hz und 1663 Hz besteht.

5. Verfahren nach Anspruch 1, wobei die Zieleinheit eine interaktive Sprachantwort-(IVR-) Einheit umfaßt.

6. Verfahren nach Anspruch 1, wobei das akustische Signal (3) weiter eine dritte Frequenzkomponente umfaßt, derart, daß das einzige alphanumerische Zeichen als eine Funktion der ersten, zweiten und dritten Frequenzen bestimmt wird.

7. Verfahren nach Anspruch 1, weiter umfassend die Schritte:
sequentielles Erzeugen über die Tonerzeugungseinrichtung (1, 1302, 1402, 1502, 1602, 1702) von aufeinanderfolgenden akustischen Mehrfrequenzsignalen, wobei jedes zumindest zwei Frequenzkomponenten mit jedem akustischen Signal umfaßt, das eine Dauer t₁ aufweist, und von einem anderen durch eine Dauer t₂ getrennt ist, wobei die akustischen Signale in Vielfachen von "n" der akustischen Signale derart erzeugt werden, daß ein Datenwort eine Dauer von n(t₁ und t₂) aufweist, wobei t₁>0 und t₂≥0;
Erzeugen, über die Tonerzeugungseinrichtung (2, 1302, 1402, 1502, 1602, 1702), eines Korrekturwortes, das zumindest eine Frequenzkomponente umfaßt und eine Dauer t₃ aufweist,
Einschieben, durch die Tonerzeugungseinrichtung (2, 1302, 1402, 1502, 1602, 1702), eines Korrekturwortes zwischen jedes der aufeinanderfolgenden Datenworte;
Übertragen, in Übereinstimmung mit einer vorbestimmten Zeitsegmentierungsbeziehung, einer abwechselnden Reihe der Datenworte und der Korrekturworte von der Tonerzeugungseinrichtung über das Telefon (1, 1706, 1708) und dem PSTN zu dem Zielort;
Analysieren, durch die Zieleinheit, der Datenworte und der Korrekturworte in Übereinstimmung mit der vorbestimmten Zeitsegmentierungsbeziehung, um ein einziges alphanumerisches Zeichen abzuleiten, das dem akustischen Signal zugeordnet ist, das die Datenworte umfaßt.

8. Verfahren nach Anspruch 1, wobei die erste vorbestimmte Funktion einer Zeit unterschiedlich von der zweiten vorbestimmten Funktion einer Zeit ist.

9. Verfahren nach Anspruch 1, wobei die erste vorbestimmte Funktion einer Zeit eine konstante Funktion ist.

10. Verfahren nach Anspruch 1, wobei die erste vorbestimmte Funktion einer Zeit eine zunehmende Funktion ist und die zweite vorbestimmte Funktion einer Zeit eine abnehmende Funktion ist.

11. Verfahren nach Anspruch 7, weiter umfassend die Schritte:
Überwachen der komplexen Übertragungsfrequenzantwort von zumindest einem Abschnitt des Übertragungssystems, das dem PSTN zugeordnet ist, während einer Übertragung eines Korrekturworts;
Bestimmen, in Übereinstimmung mit dem Überwachungsschritt, einer komplexen Übertragungsfrequenz-Antwortcharakteristik des Abschnitts des Übertragungssystems; und
Einsetzen der Charakteristik in Verbindung mit einem Fehlerkorrektur-Algorithmus, um ein inkorrekt bestimmtes alphanumerisches Zeichen abzuklären.

12. Verfahren nach Anspruch 6, wobei nur eine der Komponenten aus den folgenden Frequenzen 697 Hz, 770 Hz, 852 Hz und 941 Hz gewählt wird.

13. Verfahren nach Anspruch 12, wobei zumindest eine der Komponenten von den folgenden Frequenzen gewählt wird: 1209 Hz, 1336 Hz, 1447 Hz und 1663 Hz.

14. Verfahren nach Anspruch 6, wobei zumindest eine der Frequenzkomponenten aus einer Gruppe von zumindest neun einzelnen Frequenzen gewählt wird.

15. Verfahren nach Anspruch 1, wobei die Tonerzeugungseinrichtung ein im wesentlichen ebenes, kreditkartengroßes Modul (1302) einschließlich einer ausziehbaren Lautsprechermanschette (1304, 1306) umfaßt, die konfiguriert ist, einen Abschnitt eines Mundstücks, das dem Telefon zugeordnet ist, zu umgeben, um das Mundstück dadurch teilweise von Umgebungslärm abzuschirmen.

## Revendications

1. Procédé de transmission de données sur un réseau de téléphone commuté public (PSTN) depuis un téléphone classique (1, 1706, 1708) jusqu'à une unité de destination par l'intermédiaire de l'utilisation d'un dispositif de génération de tonalité portatif (2) au niveau dudit téléphone (1, 1706, 1708), caractérisé en ce que les données sont des données alphanumériques, et ladite unité de destination inclut un convertisseur analogique/numérique (CAN) (1716),
le procédé comprenant les étapes de:
génération, via ledit dispositif de génération de tonalité (1, 1302, 1402, 1502, 1602, 1702), d'un signal acoustique (3) qui comprend au moins des première et seconde composantes de fréquence, ladite première composante de fréquence présentant une amplitude définie en tant que première fonction du temps prédéterminée et ladite seconde composante de fréquence présentant une amplitude définie en tant que seconde fonction du temps prédéterminée;
couplage de façon amovible dudit dispositif de génération de tonalité (2, 1302, 1402, 1502, 1602, 1702) à une embouchure (1, 1708) qui est associée audit téléphone (1, 1706) pendant au moins une partie de ladite étape de génération de telle sorte que ledit signal acoustique (3) soit reçu par ledit téléphone (1, 1706, 1708) et soit émis par l'intermédiaire dudit PSTN jusqu'à ladite unité de destination;
détection dudit signal acoustique (3) au niveau de ladite unité de destination;
détermination, par ladite unité de destination, d'un point temporel auquel l'amplitude de ladite première composante de fréquence et l'amplitude de ladite seconde composante de fréquence satisfont une relation mathématique prédéterminée; et
analyse, par ladite unité de destination, dudit signal acoustique (3) audit point temporel afin de dériver un caractère alphanumérique unique qui est représenté par ledit signal acoustique (3) audit point temporel.

2. Procédé selon la revendication 1, dans lequel ladite relation mathématique prédéterminée comprend un rapport prédéterminé de ladite amplitude de ladite première composante de fréquence sur ladite amplitude de ladite seconde composante de fréquence.

3. Procédé selon la revendication 1, dans lequel ledit rapport prédéterminé est égal à l'unité.

4. Procédé selon la revendication 1, dans lequel ladite première composante de fréquence présente une fréquence choisie parmi le groupe comprenant essentiellement 697 Hz, 770 Hz, 852 Hz et 941 Hz et ladite seconde composante de fréquence présente une fréquence choisie parmi le groupe comprenant essentiellement 1209 Hz, 1336 Hz, 1447 Hz et 1663 Hz.

5. Procédé selon la revendication 1, dans lequel ladite unité de destination comprend une unité à réponse vocale interactive (IVR).

6. Procédé selon la revendication 1, dans lequel ledit signal acoustique (3) comprend en outre une troisième composante de fréquence de sorte que ledit caractère alphanumérique unique est déterminé en fonction desdites première, seconde et troisième fréquences.

7. Procédé selon la revendication 1, comprenant en outre les étapes de:
génération de façon séquentielle, via ledit dispositif de génération de tonalité (1, 1302, 1402, 1502, 1602, 1702), de signaux acoustiques multifréquences successifs dont chacun comprend au moins deux composantes de fréquence avec chaque dit signal acoustique présentant une durée t₁, et séparées l'une de l'autre par une durée t₂, lesdits signaux acoustiques étant générés selon des multiples de "n" desdits signaux acoustiques de telle sorte qu'un mot de données présente une durée de n(t₁ et t₂) où t₁ > 0 et t₂ ≥ 0;
génération, via ledit dispositif de génération de tonalité (2, 1302, 1402, 1502, 1602, 1702), d'un mot de correction comprenant au moins une composante de fréquence et présentant une durée t₃;
interposition, par ledit dispositif de génération de tonalité (2, 1302, 1402, 1502, 1602, 1702), d'un mot de correction entre chacun desdits mots de données successifs;
transmission, conformément à une relation de segmentation temporelle prédéterminée, d'une série alternée desdits mots de données et desdits mots de correction depuis ledit dispositif de génération de tonalité, par l'intermédiaire dudit téléphone (1, 1706, 1708) et dudit PSTN, jusqu'à ladite destination; et
analyse, par ladite unité de destination, desdits mots de données et desdits mots de correction conformément à ladite relation de segmentation temporelle prédéterminée afin de dériver un caractère alphanumérique unique associé avec chaque signal acoustique comprenant lesdits mots de données.

8. Procédé selon la revendication 1, dans lequel ladite première fonction du temps prédéterminée est différente de ladite seconde fonction du temps prédéterminée.

9. Procédé selon la revendication 1, dans lequel ladite première fonction du temps prédéterminée est une fonction constante.

10. Procédé selon la revendication 1, dans lequel ladite première fonction du temps prédéterminée est une fonction croissante et ladite seconde fonction du temps prédéterminée est une fonction décroissante.

11. Procédé selon la revendication 7, comprenant en outre les étapes de:
surveillance de la réponse en fréquence complexe de transmission d'au moins une partie du système de transmission en association avec ledit PSTN pendant la transmission d'un mot de correction;
détermination, conformément à ladite étape de surveillance, d'une caractéristique de réponse en fréquence complexe de transmission de ladite partie dudit système de transmission; et
utilisation de ladite caractéristique en conjonction avec un algorithme de correction d'erreur afin de clarifier un caractère alphanumérique déterminé de façon incorrecte.

12. Procédé selon la revendication 6, dans lequel seulement une desdites composantes est choisie parmi les fréquences qui suivent: 697 Hz, 770 Hz, 852 Hz et 941 Hz.

13. Procédé selon la revendication 12, dans lequel au moins une desdites composantes est choisie parmi les fréquences qui suivent: 1209 Hz, 1336 Hz, 1447 Hz et 1663 Hz.

14. Procédé selon la revendication 6, dans lequel au moins une desdites composantes de fréquence est choisie parmi un groupe d'au moins neuf fréquences uniques.

15. Procédé selon la revendication 1, dans lequel ledit dispositif de génération de tonalité comprend un module en forme de carte de crédit sensiblement plat (1302) qui inclut une gaine de haut-parleur extensible (1304, 1306) configurée de manière à entourer une partie d'une embouchure associée audit téléphone afin d'ainsi protéger partiellement ladite embouchure vis-à-vis du bruit environnementiel.
